(19) Europäisches Patentamt
European Patent Office
Office européen des brevets

(11) EP 1 563 737 A2

(12) **EUROPEAN PATENT APPLICATION**

(43) Date of publication:
17.08.2005 Bulletin 2005/33

(51) Int Cl.7: **A21D 13/00, A21D 15/02**

(21) Application number: 05250505.4

(22) Date of filing: 31.01.2005

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **10.02.2004 US 774692**<br><br>(71) Applicant: **Kraft Foods Holdings, Inc.**<br>**Northfield, Illinois 60093 (US)** | (72) Inventors:<br>• **Howard, Walter**<br>**Libertyville Illinois 60048 (US)**<br>• **Smith, Gary**<br>**Deerfield Illinois 60015 (US)**<br>• **Morris, Julie**<br>**Chicago Illinois 60646 (US)**<br><br>(74) Representative: **W.P. THOMPSON & CO.**<br>**55 Drury Lane**<br>**London WC2B 5SQ (GB)** |

(54) **Frozen sandwich made from toasted and filled bread slices**

(57) Toasted sandwich bread slices are provided having crusts that remain chewable and crunchy in texture even after the sandwiches are frozen and reheated. This improved crust texture is achieved by a process of physically tenderizing the crusts of toasted bread slices before they are frozen. The bread crusts are cracked by application of compressive force to the bread slices without permanently substantially flattening the bread slices. The cracked toasted bread are highly useful in constructing a sandwich that is frozen for stable storage, and later reheated for consumption without the crusts becoming overly hard, dry and difficult to chew.

**FIG. 1** **100**

EP 1 563 737 A2

## Description

### Field of the Invention

This invention relates to food products, and, more particularly, it relates to freezer-stable toasted bread slices and reheatable frozen sandwiches made with them.

### Background of the Invention

Frozen sandwiches are useful as relatively long shelf life convenience foods for consumers. The frozen sandwiches can be purchased and reheated for consumption on demand. As widely known in the food industry, frozen foods often have significantly longer shelf lives than fresh foods or refrigerated foods, and this generally applies to sandwich foods. Frozen storage of foods also can be useful for preserving organoleptic attributes of the foods, although not always. For instance, toasted bread slices have been used in making reheatable frozen sandwiches. Although not previously addressed in the literature, reheated frozen sandwiches generally are palatability and ready-to-eat except for the crust or edge portions of the bread slices. The bread crust of such sandwiches tends to become very hard, often almost crouton-like, after being toasted, frozen, and reheated after storage. This pronounced crust hardness in the reheated sandwiches is objectionable to many consumers, as it makes the sandwich harder to eat and detracts from the consumer's enjoyment of the other savory portions of the sandwich.

There has been a previously unappreciated and unfulfilled need for preventing the crust hardening problem arising with toasted bread slices used in frozen foods, such as sandwiches, when they are re-heated before consumption. As will become apparent from the descriptions that follow, the present invention addresses this previously unmet need as well as providing other advantages and benefits.

### Summary of the Invention

The present invention provides toasted sandwich bread slices having crusts that remain chewable and crunchy in texture even after the sandwiches are frozen and reheated. This improved texture is achieved by physically tenderizing the crusts of toasted bread slices before the toasted slices are used in constructing a sandwich that is frozen for stable storage and later reheated for consumption. A crust surrounding at least part of a crumb portion of a toasted bread slice as an edge thereof is physically "cracked" by application of compressive force to the major face or faces of the previously toasted bread slice. The compressive force applied is sufficient to form fissures in the bread crust, i. e., "crack" it, without permanently crushing or flattening the toasted slice of bread in a significant manner.

In one embodiment, the compressive force is applied to the toasted slice of bread in a balanced manner sufficient to induce the crusts to bend outward partly enough for the fissures to form in the crust, but not so much force that the crust structurally collapses or ruptures in a manner such that the bread slice cannot substantially rebound and recover a significant part of its original shape after the compressive force is discontinued. In one particular embodiment, the cracking of the bread crusts is provided by compressing toasted bread slices effective to crack the bread crust while permitting the bread slice to recover and return to at least about 90% of its original thickness, preferably at least about 95% of its original thickness.

In one embodiment, after cracking the crusts of at least two toasted bread slices, a sandwich is constructed by placing edible sandwich filling between two slices of the toasted bread slices having cracked crusts. The sandwich is frozen and maintained in that state until later reheated before consumption. When reheated, sandwiches constructed with toasted bread slices with cracked crusts have crunchy yet tender edges, which are significantly more pleasant to chew and eat than sandwiches made without cracking the crusts. Sandwiches constructed with toasted bread slices that have not been crust-cracked develop an extremely hard, tough, dry, and less chewable crust texture, especially after freezing and reheating the toasted bread slices.

In one further embodiment, the bread slices are rapidly toasted which will subsequently have their crusts cracked. In general, the more rapidly the browning (toasting) step can be completed, the lower the moisture loss experienced by bread slice. Consequently, the crumb will be less toughened from toasting. In general, the bread slice as a whole gets progressively harder and less elastic from dehydration as a function of increased toasting times needed to achieve a desired degree of browning in a high temperature environment. In one particular embodiment, the browning step is conducted before cracking under high temperature, rapid heating cycle conditions at which bread slices may be toasted at temperatures exceeding about 475°F in a period time of preferably less than about 60 seconds without scorching, burning or permitting the bread to become overly tough from excessive dehydration. In one alternative embodiment, the bread slices may be toasted using an impingement oven.

In a further embodiment, an edible oil-containing substance is applied onto the cracked crusts of the toasted bread slices prior to freezing the bread slices as part of a sandwich. The oil treatment of the cracked crusts further reduces hardness development in the crust of the bread. As a result, when the frozen sandwich containing the oil-treated cracked bread slices is reheated, the sandwich crust is crunchy yet more chewable, and thus more easily consumed. The application of the edible oil to the cracked crusts of the bread slices can be done in any convenient manner, such as by manual brushing or via sprayers. The edible oil can be applied neat, or as emulsified, or if it is a solid or semi-solid at room temperature it may be heated to a molten state to facilitate its application to a bread crust.

In a general embodiment of the present invention, there are food products comprising the cracked toasted bread slices and at least one type of edible filling. In one embodiment, sandwiches made with cracked toasted bread slices according to embodiments of the present invention include an edible filling comprising one or more of meat, cheese, vegetable, and condiment. In one embodiment, grilled cheese sandwiches are provided.

**Brief Description of the Drawings**

FIG. 1 is a flow chart of a process for providing shelf stable breads used in frozen, reheatable sandwich products according to an embodiment of the present invention.
FIG. 2 is an end view of a bread slice having a crust that is cracked and then assembled into a sandwich according to an embodiment of the present invention.

The figures are not necessarily drawn to scale. Similarly numbered elements in different figures represent like features unless indicated otherwise.

**Detailed Description of the Invention**

The present invention relates to a crust cracking treatment of toasted bread slices which is applied before freezing and reheating sandwiches constructed with the cracked toasted bread slices. The crust cracking treatment significantly reduces hardness and dryness development that otherwise tends to occur in bread slice crusts when frozen for storage and later reheated for consumption. The toasted bread slices that have been cracked according to embodiments of the present invention have improved texture and palatability relative to similar bread slices that lack the crust cracking treatment. In particular, the cracked crusts remain crunchy yet pleasantly chewable and not hard and tough after subsequently being frozen for stable storage and later reheated for consumption.

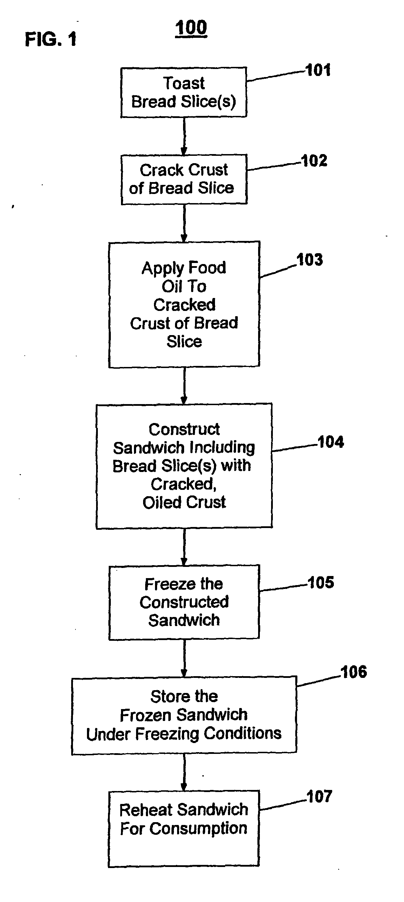

Referring to FIG. 1, a process **100** is illustrated for providing shelf stable breads used in frozen, reheatable sandwich products according to an embodiment of the present invention. In step **101**, bread slices that will be used subsequently in assembling a sandwich are first toasted. Toasting generally causes moisture loss in bread slices. In a preferred embodiment of the present invention, moisture loss in the bread slices is minimized during toasting by browning a side of the bread using higher heating temperatures and shorter heating times than used in standard procedures.

For purposes herein, "toasted" means a bread slice is heated until browned by a heating system. A "browned" bread slice is browner in color and contains less moisture than before heat treatment. The heating method used to brown the slice of bread is not limited to any particular one. The toasting of the bread slice can be done such as by grilling, close proximity radiant heating, convective heating means, or combinations of these. For example, grilling or impingement oven heating techniques may be used to brown the bread slice. "Grilling" means a bread slice is heated at least in part with conductive heat until it is browned by placing the bread slice directly in contact with a solid flat grill or an upraised gridiron, or alternatively a barred grill supports the bread slice while it is heated. It may be accomplished by grilling, toasting, or comparable cooking techniques. Rapid grilling methods are preferred as they further enhance the eating quality of the sandwich.

For purposes of embodiments of the present invention, bread slices are toasted on at least one side thereof. Toasting one side only of the bread slice using the high temperature rapid heating procedures of embodiments of this invention is generally adequate to impart a crunchy effect in the toast that is pleasing to the consumer. In an alternate embodiment, both sides of a bread slice can be toasted, although this is not required. A toasted side of the bread slice generally is used as the exposed (outer) side of the bread slice once it is assembled into a sandwich, as described in more detail below.

In one embodiment, bread slices having a thickness of about 0.5 to about 1.0 inch may be toasted rapidly until browned on at least one side to an acceptable shade of brown color in less than about 60 seconds, and generally in the range of about 30 to about 60 seconds, using a hot grill surface maintained at a temperature greater than about 475°F, and particularly greater than about 500°F, and more particularly greater than about 515°F. Standard toasting temperatures of about 300 to about 380°F applied for multiple minutes of heating tend to overly dehydrate the bread, leaving a less tender toasted bread product. Toasting also can be accomplished in high temperature, rapid heating cycle arrangements such as, for example, radiant heating element, radiant heating lamp, and/or convective oven arrangements.

In step 102, the toasted bread slices have their crusts "cracked" by application of a compressive force applied against at least one face of each bread slice in an amount sufficient to form macroscopic fissures or cracks in the crust without significantly flattening the bread slice, including its crust. The compressive force preferably includes a component oriented substantially perpendicular to a face of the slice of toasted bread. In one embodiment, the compressive force applied is sufficient to crack the crust of a toasted bread slice while not being too excessive such that the bread slice is able to recover at least about 90%, and at least as much as about 95%, of its original thickness application and removal after application and removal of the compressive force is removed or ended.

Moreover, the preferred compressive force magnitude allows the crust to be cracked without causing any portion of the crust to detach completely from and expose the crumb at any location around the edge of the crumb. The general shape and general continuous attachment of the crust around the crumb should be retained despite the crust cracking procedure. The cracking of the crust of the toasted bread slices has been found to significantly prevent hardness development in the toasted bread slice crusts during subsequent freezing and reheating operations.

The compressive force applied to crack the bread crust can be imposed by any convenient mechanical or manual operation. The amount of compressive force applied is balanced between providing effective cracking of the bread slice crust without crushing the crust and crumb to the point that they stay permanently flattened to a significant degree. Overly flattened and crushed bread slices are undesirable, as they tend to have harder, tougher textures in the finished food product into which they are assembled.

Effective compressive devices include, for example, a roller pin, opposing roller nip pressure, reciprocating stamping press, opposing conveyor belt nip pressure, or other compressive force devices. In one embodiment, the compressive force is applied using roller contact pressure. The roller contact pressure may be applied manually, such as with a rolling pin, or by automated equipment. In one automated operation, the toasted bread slice may be fed via a conveyor belt or feeding it manually to and through a pressure nip defined by at least one roller engaging a side of the toasted bread slice, while the opposite side of the bread slice is supported by a firm non-moving surface or an opposing roller. The clearance between the roller and the opposing surface or other roller is coordinated with the thickness of the bread slice to provide an effective compressive force. Other compression arrangements also may be employed that provide the requisite compressive force.

Referring to step **103**, food oil may be applied to the bread slice before it is frozen. This is an optional step. More specifically, the cracked crusts are treated with an edible oil-containing substance to further tenderize the cracked bread crusts and impart a sheen to the crust that can carry over into the finished product even after freezing and reheating the bread slice. The edible oil can be an edible vegetable oil (e.g., canola oil, olive oil, safflower oil, etc.), melted margarine, melted butter, emulsions of these oils, and the like.

In step **104,** a sandwich is assembled using at least two toasted bread slices having cracked crusts to enclose an intervening edible filling. In an alternative embodiment, a single toasted bread slice can be folded over an edible filling.

In step **105,** the assembled sandwiches are frozen for stable storage at a freezing temperature. In general, a freezing temperature of approximately 32°F (0°C) or lower is used. The freezing procedure freezes all moisture-bearing components of the sandwich, such as the bread slices and edible fillings containing moisture.

In step **106,** the frozen sandwiches can be stably handled, transported, and stored under freezing conditions for an extended period of time without experiencing any significant deterioration in food quality.

In step **107,** the frozen sandwiches are reheated for consumption. The reheating step is conducted in a manner that ensures that the sandwich is completely thawed out and the sandwich components are heated to a temperature suitable for pleasant consumption. Properly reheated sandwiches can be chewed without great difficulty, including the bread slice crusts.

The method used to reheat the frozen sandwiches is not particularly limited. It is preferred to use a rapid cooking oven, including, for example, a convection oven, a radiant heat oven, a microwave oven, or a combination or hybrid oven. For example, commercial rapid cook ovens that combine convection with microwave for high-speed cooking are suitable. For instance, a modified high-velocity impingement system may be used that propels hot air directly down onto the food, then pulls it around and underneath the product, which is also coupled with a microwave component to speed the cooking process. Another exemplary hybrid cooking oven combines quartz halogen cooking with microwave. These combination ovens may be stand alone units or alternatively may be incorporated into a vending machine that stores the sandwiches under frozen conditions until selected by a customer, at which point the sandwich is reheated and dispensed for consumer consumption.

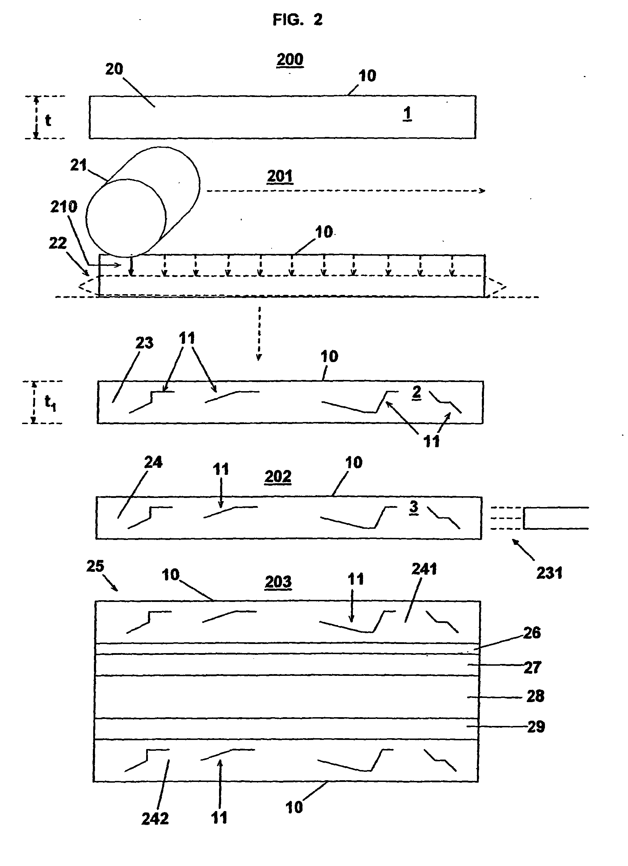

Referring to FIG. 2, schematic **200** is an end view of a toasted bread slice **20** having a crust **1** surrounding a crumb (not depicted) having an original thickness **"t"**. Side **10** of the bread slice has been toasted in a previous step. Schematic **201** indicates the use of a rolling pin **21** to crack the bread crust. In this illustration, the rolling pin **21** is rolled across the toasted side **10** of the bread slice in the direction indicated (and/or back and forth) with sufficient downward compressive force exerted onto side **10** to temporarily form a compressed bread slice configuration **22** having a crust temporarily bent or otherwise deformed out of its original generally upright orientation sufficient to form a tenderized toasted bread slice **23** having a cracked crust **2**, i.e., a crust including a plurality of discrete macroscopic fissures **11** in the crust **2** that were not present before the toasted slice was compressed. The term "cracked" means a crust of a toasted bread slice is physically disrupted such that macroscopic fissures are formed in the crust of a magnitude that they can be seen without need of optical magnification.

In this non-limiting illustration, the crust **1** of the toasted slice of bread is cracked by the compressive force exerted from side **10** of the bread slice between the roller pin and a flat rigid surface supporting the opposite side of the bread slice. A force arrow **210** is provided in schematic **201** under the roller pin **21** indicating a directional component of the compressive force exerted on the bread slice **20**.

The crust of the toasted bread will possess some limited degree of resiliency against the compressive force applied to it, even though it becomes cracked. That is, the compressive force applied is sufficient to form the macroscopic fissures or cracks **11** in the original crust **1** to provide cracked crust **2**, but the resulting crust **2** as a whole, retains enough elasticity to rebound and recover most of its original pre-compression shape removal of after the compressive force. That is, the crust is usually oriented generally perpendicular to the crumb faces. It is important, however, that the compressive force does not exceed a predetermined threshold beyond which at some point the elasticity of the bread crust is exceeded and the bread will permanently collapse and be flattened such that it does not return to the substantially perpendicular orientation of the crumb. The compressive force needed to achieve the desired result of cracking the crust of the bread slice without crushing it can be determined empirically for a given type and geometry of toasted bread slice and roller (or other compression device) arrangement.

In one embodiment, the compressive force applied is selected to be sufficient to crack the crust of a toasted bread slice while not being too excessive such that the bread slice has a thickness "$t_1$" after having its crust cracked that is at least about 90%, particularly at least about 95%, of its original thickness "t" after the compressive force is removed or ended. In one embodiment, the extent of compression exerted on a bread slice of about 0.5 to about 1.0 inch original thickness results in about 40% to about 60% temporary thickness reduction while and where the bread slice is still under compression. As noted earlier, upon removing the compressive force, the bread slice recovers at least about 90% of its original thickness in one embodiment of this invention.

Schematic **202** shows the application of an edible food oil **231** to the cracked crust **2** providing slice **24** having oiled, cracked crust **3.** As previously indicated, this procedure is optional and, generally, serves to further tenderize the cracked crust and, additionally, may impart an optically pleasing sheen to the crust that remains after freezing and reheating.

Schematic **203** shows the assembly of a sandwich **25** according to a non-limiting embodiment of the present invention wherein two of the similarly cracked-crust, toasted bread slices **241** and **242**, in which edible filling has been interposed between the pair of bread slices. In this illustration, a condiment **26**, meat filling **28** and cheese slices or layers **27** and **29** are arranged between the slices of bread **241** and **242** having cracked crusts. Slices **241** and **242** correspond to slice **24**. It will be appreciated that either or both of slices **241** and **242** alternatively could correspond to cracked, but not oiled, slice **23.** The edible filling could include less or more different types of filling materials, and the sequence of layers of filling materials can be changed to any desired order. After assembly of the sandwich, it would be frozen (not shown) and stored in that state until reheated for consumption. The reheated sandwiches having the modified bread slices according to embodiments of this invention have excellent textural character throughout, including along the crusts of the bread slices.

The type of bread used as the source of the bread slices used in embodiments of the present invention is not particularly limited, as long as it is available in shapes from which slices may be prepared so to have generally flat opposite faces, i.e., the crumb, and a peripheral side edge, i.e., the crust, bounding at least part of the crumb. In one embodiment, the crust completely surrounds the crumb of the bread slice. The three basic types of breads that may be used are white, brown, and whole meal. The bread shapes from which slices can be obtained, include, for example, tin, sandwich loaf, split tin, farmhouse, batch loaf, plait, Coburg, bloomer, Vienna, cottage, and barrel. The particular bread types may be, for example, white, brown, sourdough, rye, oat bran, Hawaiian, pumpernickel, baguette, soda, corn, foccacia, naan, and so forth.

This invention is most advantageously applied to sandwiches constructed with sliced bread in which each bread slice has a crust extending around the crumb, which has two opposite generally flat faces. Breads for subs, buns, bagels, and croissants, can be sliced in half to provide two halves but lack an edge crust between two separate faces. Their shape is less conducive to accommodating the crust-cracking procedure used in accordance with embodiments of this invention to reduce edge textural hardening. Similarly, the breads used in this invention also generally do not include flat bread wraps, such as pita, tortilla, chapattis, and the like, as they cannot be practically sliced for use as a conventional sandwich bread.

In general, the sandwich is filled with one or more types of food items, including, but not limited to, cheeses, meats, vegetables, fruits, condiments, seasonings, food additives, and processed foods.

The type of cheese filling that may be used is not particularly limited. The cheese, for example, may be process cheese, cheddar cheese, Swiss cheese, American cheese, Provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, and combinations of different cheeses. A cheese filling may be used in any form convenient for incorporation into the sandwich, such as sliced, shredded, shaved, flaked, crumbs, slab, and so forth.

The type of meat filling that may be used is not particularly limited. The meat may be beef (*e.g.*, roast beef, barbecued beef, steak, hamburger, etc.); poultry (*e.g.*, chicken breast, barbecued chicken, turkey breast, turkey burger, chicken salad, etc.); pork (*e.g.*, ham, barbecued pork, ham salad, etc.); fish (*e.g.*, tuna, tuna salad, lox, etc.); egg products (*e.g.*, pre-cooked egg patties, etc.). The meat filling also may be processed meats like bacon, sausage, bologna, olive loaf, pepperoni, salami, corned beef, pastrami, liverwurst, and so forth. The meat may be in a sliced, shaved, shredded, chopped, or pre-cooked in a patty shape, or other convenient form, for inclusion as a filling in the sandwich.

The vegetable filling that may be, for example, onions, lettuce, soy meal, water cress, tomato, peppers, garlic, bean sprouts, cucumber, and so forth, and combinations thereof.

The condiment may be ranch dressing, pickle relish, catsup, barbecue sauce, mayonnaise, butter, margarine, honey, olive oil, canola oil, salad dressing, horseradish sauce, and so forth, and combinations thereof.

The sandwich breads and fillings also can be seasoned, such as with salt, pepper, oregano, hot pepper flakes or spreads, onion powder, garlic powder, sesame seeds, poppy seeds, and so forth, and combinations thereof.

Fruits, such as olives, avocado, pineapple, and so forth, may be included as a filling. Other types of processed foods also may be used as a sandwich filling, such as peanut butter, fruit jams or spreads, and so forth.

Food additives, such as preservatives, flavorings, colors, emulsifiers, soya flour, and so forth, can be included in or applied to one or more of the fillings.

In one embodiment, the sandwich assembled with the toasted bread slices having cracked crusts is a grilled cheese sandwich. In another, the sandwich is a turkey, cheese, and ranch dressing sandwich. In yet another, the sandwich is a ham, cheese, onions, and barbecue sauce sandwich. Other sandwich varieties also are encompassed.

The examples that follow are intended to further illustrate, and not limit, embodiments in accordance with the invention. All percentages, ratios, parts, and amounts used and described herein are by weight unless indicated otherwise.

**Examples**

**Example 1:**

The effects of crust cracking, rapid toasting, and crust oiling on sandwich bread slices were investigated in two different types of sandwiches. For comparison purposes, similar sandwiches were prepared using a standard toasting procedure and without crust cracking or oiling prior to freezing and reheating the sandwiches.

The two types of sandwiches prepared were Honey ham and cheese with Alpha Baking Club Yellow bread slices, and turkey ranch and cheese with Alpha Baking Rolled oat bran bread slices. The specific formulations of the two different types of sandwiches used in these studies included the following:

| Honey Ham and Cheese Sandwich Component | Content Per Sandwich (grams) |
|---|---|
| Oscar Mayer® Honey Ham | 56 |
| Alpha® Baking Club Yellow bread (ungrilled) | 87 |
| ChedaSharp (Kraft, 160 Slice Pullman) | 27 |
| Bull's Eye® Honey Smoke BBQ sauce | 9 |
| Canola oil | 1 |
| Margarine (Land-O-Lake®) | 1 |
| Brown sugar (Domino®) | 1 |
| Grilled onions (3/8 inch Jon-Lin® IQF) | 5 |
| | 187(Total grams) |

| Turkey Ranch and Cheese Sandwich Component | Content Per Sandwich (grams) |
|---|---|
| Oscar Mayer® Oven Roasted Turkey breast | 45 |

(continued)

| Turkey Ranch and Cheese Sandwich Component | Content Per Sandwich (grams) |
|---|---|
| Alpha® Baking Rolled Oat bran (ungrilled) | 120 |
| Hot pepper cheese (Chaing brand) | 16 |
| Sharp Cheddar (Kraft brand, 166S1 Pullman) | 14 |
| Ranch Dressing (Kraft brand) | 14 |
| Canola Oil | 1 |
| Margarine (Land-O-Lake®) | 1 |
| | 211 (Total grams) |

Bread Grilling

The bread slices were grilled by one of two following general techniques:

(1) Standard grilling using a grill surface temperature of approximately 375°F. The bread slices had a light spray of canola oil applied to the surface (side) of the bread slice that was to be grilled. The bread slices were grilled on that one side for about 5 minutes to a golden brown color.

(2) Rapid grilling using the grilling surface set to a very high temperature of greater than 515°F (the highest temperature measurable by the thermometer used), and spraying the surface of the bread slice to be toasted prior to grilling with canola oil. This technique causes the side of the bread slice that had received the canola oil spray to toast in less than 60 seconds.

The grill apparatus used for the standard and rapid grilling arrangements was a Vulcan grill, manufactured by Vulcan.

The following Table 1 sets forth the grill temperatures measured at nine different grill locations at or near where the bread slices were supported during toasting for the separate standard and rapid grilling arrangements.

Table 1

| STANDARD GRILLING: Grill Surface Temp, (°F) | | | | RAPID GRILLING: Grill Surface Temp, (°F) | | | |
|---|---|---|---|---|---|---|---|
| Grill location→ ↓ | LEFT | CENTER | RIGHT | Grill location→ ↓ | LEFT | CENTER | RIGHT |
| REAR | 345.0 | 360.0 | 362.0 | REAR | >515 | >515 | >515 |
| CENTER | 344.0 | 377.0 | 375.0 | CENTER | >515 | >515 | >515 |
| BOTTOM | 321.0 | 335.0 | 345.0 | BOTTOM | 515.0 | >515 | >515 |

Tables 2 and 3 indicate the moisture content measurement results obtained for six bread slice samples grilled for each bread type and under each grilling arrangement.

Table 2

| Grilling Technique | Bread Type | Slice Thickness (inch) | Wgt. (g/ slice) | Wgt. (g) After Grilling | Time on Grill (Min: sec) | Moisture Loss (%) | Ave. Moisture Loss (%) |
|---|---|---|---|---|---|---|---|
| Standard | Club Yellow | 0.75 | 41.4 | 37.9 | 5:00 | 8.45 | |
| " | " " | " | 43.1 | 39.4 | " | 8.58 | |
| " | " | " | 46.0 | 41.9 | " | 8.91 | |
| " | " | " | 42.2 | 38.3 | " | 9.24 | |
| " | " | " | 43.6 | 39.6 | " | 9.17 | |

Table 2   (continued)

| Grilling Technique | Bread Type | Slice Thickness (inch) | Wgt. (g/ slice) | Wgt. (g) After Grilling | Time on Grill (Min: sec) | Moisture Loss (%) | Ave. Moisture Loss (%) |
|---|---|---|---|---|---|---|---|
| " | " | " | 46.9 | 43.3 | " | 7.68 | 8.67 |
| | | | | | | | |
| Standard | Rolled Oat | 0.75 | 59.6 | 55.7 | " | 6.54 | |
| " | " | " | 59.5 | 54.4 | " | 8.57 | |
| " | " | " | 67.4 | 62.2 | " | 7.72 | |
| " | " | " | 64.7 | 59.7 | " | 7.73 | |
| " | " | " | 65.1 | 60.3 | " | 7.37 | |
| " | " | " | 67.9 | 63.0 | " | 7.22 | 7.52 |

Table 3

| Grilling Technique | Bread Type | Slice Thickness (inch) | Wgt. (g/ slice) | Wgt. (g) After Grilling | Time on Grill (Min: sec) | Moisture Loss (%) | Ave. Moisture Loss (%) |
|---|---|---|---|---|---|---|---|
| Rapid grilling | Club Yellow | 0.75 | 42.1 | 40.2 | 0:35 | 4.51 | |
| " | " | " | 48.1 | 45.4 | " | 5.61 | |
| " | " | " | 46.7 | 44.8 | " | 4.07 | |
| " | " | " | 46.7 | 44.1 | " | 5.57 | |
| " | " | " | 44.0 | 42.0 | " | 4.55 | |
| " | " | " | 45.0 | 42.5 | " | 5.56 | 4.98 |
| | | | | | | | |
| Rapid grilling | Rolled Oat | 0.75 | 66.5 | 63.7 | 0:40 | 4.21 | |
| " | " | " | 61.9 | 59.7 | " | 3.55 | |
| " | " | " | 62.5 | 60.8 | " | 2.72 | |
| " | " | " | 63.4 | 61.5 | " | 3.00 | |
| " | " | " | 69.6 | 67.8 | " | 2.59 | |
| " | " | " | 66.1 | 64.0 | " | 3.18 | 3.21 |

As shown by the results in Tables 2 and 3, the moisture loss of the breads toasted according to the rapid grilling technique (Table 3) was significantly less than the bread slices toasted by a standard heat treatment (Table 2).

Crust Cracking Procedure

Following grilling, the bread slices that had been rapid grilled were rolled with a 3 inch diameter rolling pin so that each crust thereof was compressed by approximately 50% of its original thickness and then the compression was removed. The toasted bread slices recovered approximately 90 % of their original thickness upon removal of the compressive force.

Crust Oiling

Following the compression of the rapid grilled toasted bread slices, a light film of melted margarine oil was brushed onto the cracked crusts.

Sandwich Assembly

Sandwiches were assembled in the following sequence of layers (from bottom to top) using either the standard grilled toast or the rapid grilled toast having cracked and oiled crust, as indicated below.

Four sets of sandwiches, indicated as follows, were prepared with each of these types of builds using each of the two different types of breads indicated above: (1) Honey Ham & Cheese using Standard grilled bread; (2) Honey Ham & Cheese using Rapid Grill bread; (3) Turkey Ranch using Standard grill bread; and (4) Turkey Ranch using Rapid Grill bread.

Standard Build Sandwich:

  (a) Grilled bread slice - toasted side out (standard grilled)
  (b) Condiment(s) (for ham sandwich: BBQ sauce, onion, sugar blend; for turkey sandwich: ranch dressing)
  (c) Cheese slice
  (d) Meat filling
  (e) Cheese slice
  (f) Grilled Bread slice - toasted side out (standard grilled)

Modified Bread Slice Build Sandwich:

  (a) Grilled bread slice - toasted side out (rapid grilled, crust cracked and oiled)
  (b) ½ meat filling component
  (c) Cheese slice
  (d) Condiment(s) (for ham sandwich: BBQ sauce, onion, sugar blend; for turkey sandwich: ranch dressing)
  (e) Cheese slice
  (f) ½ Meat filling
  (g) Grilled Bread slice - toasted side out (rapid grilled, crust cracked and oiled)

Freezing and Storage

Following sandwich assembly, the sandwiches were packaged and placed in storage in a freezer at about 0°F and stored for approximately 24 hours until frozen.

Sandwich Reheat and Evaluation

After storage under freezing conditions, the frozen turkey sandwiches made with Rolled Oat Bran bread were reheated from frozen conditions using a combination oven, which was a Garland Mealstream V unit having concurrent convection and microwave heating functionalities. The convection oven setting was 480°F and the microwave setting was 100% (1400 watts). The core temperature of the various sandwiches was measured in the central filling region thereof at different heating times, and the product quality was assessed from an organoleptic standpoint. A core temperature of at least 140°F was the target value for these studies.

In Table 4, "Standard Preparation" identifies a sandwich made using a standard grilling technique and standard assembly practices; while "Modified Preparation" identifies a sandwich made in accordance with techniques of the present invention using rapid grilling techniques and crust cracking and oiling.

Table 4

| Turkey, Standard Preparation | | Turkey, Modified Preparation | | Ham, Standard Preparation | | Ham, Modified Preparation | |
|---|---|---|---|---|---|---|---|
| Time Out of Oven, min:sec | Temp. Out of Oven, °F | Time Out of Oven, min:sec | Temp. Out of Oven, °F | Time Out of Oven, min:sec | Temp. Out of Oven, °F | Time Out of Oven, min:sec | Temp. Out of Oven, °F |
| 0:15 | 87 | 0:15 | 100 | 0:15 | 85 | 0:15 | 132 |
| 0:30 | 95 | 0:30 | 107 | 0:30 | 92 | 0:30 | 145 |
| 1:00 | 111 | 1:00 | 132 | 1:00 | 107 | 1:00 | 159 |
| 1:30 | 122 | 1:30 | 143 | 1:30 | 115 | 1:30 | 167 |
| 2:00 | 129 | 2:00 | 149 | 2:00 | 122 | 2:00 | 170 |
| 2:15 | 132 | 2:15 | 150 | 2:15 | 126 | 2:15 | 170 |
| 2:30 | 134 | 2:30 | 152 | 2:30 | 128 | 2:30 | 172 |
| 2:45 | 136 | 2:45 | 152 | 2:45 | 130 | 2:45 | 172 |
| 3:00 | 138 | 3:00 | 154 | 3:00 | 130 | 3:00 | 174 |
| 3:15 | 140 | 3:15 | 154 | 3:15 | 132 | 3:15 | 174 |
| 3:30 | 141 | 3:30 | 156 | 3:30 | 133 | 3:30 | 174 |
| 3:45 | 143 | 3:45 | 156 | 3:45 | 133 | 3:45 | 175 |
| 4:00 | 143 | 4:00 | 157 | 4:00 | 135 | 4:00 | 175 |
| 4:15 | 145 | 4:15 | 158 | 4:15 | 135 | 4:15 | 175 |
| 4:30 | 145 | 4:30 | 158 | 4:30 | 137 | 4:30 | 175 |
| 4:45 | 147 | 4:45 | 160 | 4:45 | 137 | 4:45 | 176 |
| 5:00 | 147 | 5:00 | 160 | 5:00 | 138 | 5:00 | 176 |
| 5:15 | 147 | 5:15 | 161 | 5:15 | 138 | 5:15 | 176 |
| 5:30 | 147 | 5:30 | 161 | 5:30 | 138 | 5:30 | 176 |

The sandwiches in accordance with the teachings of the present invention attained higher core sandwich temperatures for the same heating periods as compared to the standard sandwiches. The heating time needed for the turkey sandwich product made according to an embodiment of the present invention was reduced from 1:40 minutes: seconds to 1:25 minutes:seconds, and resulted in a finished product temperature of 143°F. Importantly, the eating quality of this sandwich, especially at the crusts of the sandwich, was significantly improved. The crusts were soft but crunchy, while that of the standard build product was hard and crouton-like.

The heating time needed for the ham sandwich product made in accordance with teachings of the present invention also was reduced to 1:10 min:sec in order to deliver a finished product core temperature of 141 °F. The same result was observed as that for the turkey sandwich in that crusts of the ham sandwich were more tender but crunchy, while those of the standard build product were hard and crouton-like.

The results of these experiments clearly demonstrated the beneficial effects in terms of the crust's tenderized textural qualities attained by cracking the crusts of the toasted bread slices, as well as the rapid grilling and crust oiling procedures, before freezing and reheating a sandwich assembled with the modified toasted bread slices.

**Example 2:**

Five grill cheese sandwiches were prepared having the constructions indicated in Table 5. Variables included the grilling type (flat surface rapid heating, or impingement oven heating), and the use or non-use of a toast edge-cracking treatment.

Table 5

| Sandwich Component | Quantity |
|---|---|
| Sourdough bread, Gonella 3/8" thick | 2 slices (14.65 g/slice) |
| Process American Cheese (Kraft) | 2 slices (14.2 g/slice) |
| Process Swiss Cheese | 1 slice (14.2 g) |
| Liquid Oleo | -2-3 g/slice |

Bread Toasting Methods Used:

Impingement:

Impingement heating was used to grill bread slices by passing breads through a Lincoln Tabletop tunnel oven with an internal temperature of 465°F as measured by IR detection. Residence time in the oven was minimized to 50 seconds ± 5 seconds. Air distribution within the impingement oven was set for both top and bottom air delivery. Air distribution was set to deliver 100% bottom air capability with top air set for 50% of capability. At the oven exit, comparison browned bread slices that would not receive edge treatment before being used in sandwich assembly were brushed on the toasted surface with approximately 2-3 g liquid oleo.

Rapid Grilling:

Rapid grilling was alternatively used to toast bread slices using a griddle with a surface temperature of 385± 25°F. Bread slices were first brushed with approximately 2-3 g liquid oleo, and then were placed on the griddle surface, brushed-side down, for 20±5 seconds. The toasting was discontinued if the bread appeared to start smoking. Residence time varied due to the type of bread, and time needed to develop a golden brown color of toasted bread.

Edge Treatment:

Edge treatment of toasted bread slices was conducted in two steps. The grilled bread slice was first lightly rolled to crack the edge of the bread or crust using about a 3 inch roller pin, and then liquid oleo was applied to that edge. After cracking the edge, the bread slice was brushed on the toasted side with approximately 2-3 g liquid oleo. Comparison slices of toasted bread were evaluated which did not receive this edge treatment.

Sandwich Preparation and Storage:

For all sandwiches prepared with the different types of toasted bread slices, three slices of cheese, comprised of two of Kraft processed American cheese with one slice of Swiss cheese, were inserted between two similarly toasted and similarly edge-treated or non-edge-treated types of bread (toasted sides out). The sandwich products were covered until frozen.
All sandwich samples were subsequently frozen in a liquid nitrogen tunnel and inserted into plastic storage bags. The frozen products were then stored temporarily in a freezer at 0°F. The frozen bag products were then inserted into KRh Thermal packaging and placed in a KRh Vending machine and allowed to come to constant temperature of 5°F.

Evaluations:

Evaluations were conducted using a KRh Thermal vending machine in which the frozen sandwiches had been stored. The reheat menu used was 30 seconds of microwave energy followed by 5 seconds of impingement/convection air heating.

Results:

Sandwiches prepared with the sourdough bread slices that had been edge cracked and rapid grilled for toasting provided reheated sandwich products with the softest bread slice edges as compared to the bread slices that had not been edge cracked or alternatively those prepared with impingement heat toasted bread slices, even after 2-3 minutes standing time after completion of the reheating procedure. Edge treatments used on impingement-toasted bread slices also provided reheated sandwiches with softened edges after 2-3 minutes standing time, but the edge quality improvement was not as significant as that of the rapid grilled and edge cracked sourdough bread slices. However, the bread (crumb) texture of the impingement grilled product was considered to be more desirable during evaluation as it was perceived as having more "crunch" than the rapid grilled bread slices. Sandwiches prepared with toasted sourdough bread slices, whether rapid grilled or impingement heated, but which were not edge cracked, were initially soft immediately after exiting the reheating device but became very hard and unpleasant to eat after two minutes of standing time.

While the invention has been particularly described with specific reference to particular process and product embodiments, it will be appreciated that various alterations, modifications and adaptations may be based on the present disclosure, and are intended to be within the spirit and scope of the present invention as defined by the following claims.

**Claims**

1.    A reheatable frozen food product comprising an edible filling between toasted bread slices having cracked crusts.

2.    A reheatable frozen food product according to Claim 1, wherein each toasted bread slice has an original respective thickness and the cracked crusts comprise fissures formed by compressing, in an unfrozen state, the toasted bread slices effective to crack the respective crusts while retaining at least 90% of original respective thickness of each bread slice.

3.    A reheatable frozen food product according to Claim 1 or 2, wherein the edible filling comprises cheese.

4.    A reheatable frozen food product according to any one of Claims 1 to 3, wherein the edible filling comprises meat.

5.    A reheatable frozen food product according to any one of Claims 1 to 4, wherein the bread slices each are independently selected from the group consisting of white bread, brown bread, whole wheat bread, oat bran, sourdough bread, rye bread, Hawaiian bread, pumpernickel bread, baguette, soda bread, corn bread, foccacia bread, and naan bread.

6.    A reheatable frozen food product according to Claim 3,wherein the cheese is selected from the group consisting of process cheese, cheddar cheese, Swiss cheese, American cheese, Provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, and combinations thereof.

7.    A reheatable frozen food product according to any one of Claims 1 to 6, wherein the filling comprises meat filling selected from the group consisting of beef, pork, poultry, fish, and combinations thereof.

8.    A reheatable frozen food product according to any one of Claims 1 to 7, wherein the filling comprises vegetable filling selected from the group consisting of lettuce, soy meal, water cress, tomato, peppers, onions, garlic, bean sprouts, cucumber, and combinations thereof.

9.    A reheatable frozen food product according to any one of Claims 1 to 8, wherein the filling includes a condiment selected from the group consisting of ranch dressing, mustard, pickle relish, catsup, barbecue sauce, mayonnaise, butter, margarine, honey, olive oil, canola oil, salad dressing, horse radish sauce, and combinations thereof.

10.    A packaged sandwich suitable for freezing and reheating for consumption comprising toasted bread slices having respective cracked crusts and an edible filing between the slices.

11.    A process for making a sliced bread product comprising providing a bread slice with a crust portion, toasting the bread slice, and compressing the toasted bread slice effective to crack the crust portion without permanently and substantially flattening the bread slice.

12.    The process of Claim 11,wherein the compressing comprises feeding roller contact pressure to a side of the toasted bread slice.

13.    The process of Claim 11 or 12, wherein the compressing comprises conducting the toasted bread slice through a pressure nip defined by at least one roller.

14. The process of any one of Claims 11 to 13, wherein the compressing comprises contacting a reciprocal platen press member with a side of the toasted bread slice.

15. The process of any one of Claims 11 to 14, wherein the toasting of the bread slice comprises grilling at least one side of the bread slice at a temperature of at least about 475°F for a predetermined amount of time.

16. The process of Claim 15,wherein the predetermined amount of time for toasting is less than about 60 seconds.

17. The process of any one of Claims 11 to 16 further comprises applying an edible oil-containing substance to the cracked crust portion.

18. The process of any one of Claims 11 to 17 further comprises freezing the toasted bread slice.

19. The process of Claim 18further comprises reheating the frozen bread slice so as to provide a bread slice having a chewable crust.

20. The process of any one of Claims 11 to 19, wherein the bread slice has an original thickness and the compressing without permanently and substantially flattening the toasted bread slice comprises compressing the toasted bread slice so that the bread crust portion is cracked and the bread slice retains at least 90% of the original thickness.

21. The process of any one of Claims 11 to 20, wherein the compressing without permanently and substantially flattening the toasted bread slice comprises compressing the toasted bread slice having an original thickness to a reduced thickness of about 40 to about 60% while compression is being applied so that the bread crust portion is cracked and the bread slice returns to at least 90% of the original thickness after the step of compressing.

22. The process of any one of Claims 11 to 21, wherein the bread slice comprises a crumb surrounded at least in part by the crust portion and toasting the bread slice comprises browning the crumb.

23. A process for making a reheatable frozen sandwich comprising, providing bread slices having crusts, toasting the bread slices, compressing the toasted bread slices to crack the crusts without permanently and substantially flattening the bread slices, constructing a sandwich by placing an edible filling between the toasted bread slices having cracked crusts, and freezing the sandwich.

24. The process of Claim 23 further comprises packaging the sandwich.

25. The process of Claim 23 or 24, wherein the compressing comprises applying roller contact pressure to a side of each toasted bread slice.

26. The process of any one of Claims 23 to 25, wherein the compressing comprises feeding each toasted bread slice through a pressure nip defined by at least one roller.

27. The process of any one of Claims 23 to 26, wherein the compressing comprises contacting a side of each toasted bread slice with a reciprocal platen press member.

28. The process of any one of Claims 23 to 27 further comprises applying an edible oil-containing substance to the cracked crust before performing any freezing and reheating of the toasted bread slice.

29. The process of any one of Claims 23 to 28, wherein the compressing without permanently and substantially flattening the toasted bread slices comprises compressing each toasted bread slice having a respective original thickness so that each respective bread crust is cracked and the respective bread slice returns to at least 90% of the respective original thickness.

30. The process of any one of Claims 23 to 29, wherein the compressing without permanently and substantially flattening the toasted bread slice comprises compressing the toasted bread slice having an original thickness to a reduced thickness of about 40 to about 60% while compression is being applied so that the bread crust is cracked and the bread slice returns to at least 90% of the original thickness after the steps of compressing is completed.

31. The process of any one of Claims 23 to 30, wherein toasting comprises heating at least one side of a bread slice having a crumb surrounded at least in part by the crust sufficient to brown the crumb.

32. The process of any one of Claims 23 to 31, wherein the toasting of the bread slice comprises grilling at least one side of the bread slice at a temperature of at least about 475°F for less than about 60 seconds.

33. The process of Claim 32,the toasting of the bread slice comprises heating at least one side of the bread slice with an impingement oven for a length of time sufficient for toasting.

**FIG. 1**

**100**

```
        ┌─────────────────┐
        │      Toast      │——101
        │  Bread Slice(s) │
        └─────────────────┘
                 │
                 ▼
        ┌─────────────────┐
        │   Crack Crust   │——102
        │  of Bread Slice │
        └─────────────────┘
                 │
                 ▼
        ┌─────────────────┐
        │    Apply Food   │——103
        │      Oil To     │
        │     Cracked     │
        │  Crust of Bread │
        │      Slice      │
        └─────────────────┘
                 │
                 ▼
        ┌──────────────────────┐
        │       Construct      │
        │ Sandwich Including   │——104
        │   Bread Slice(s) with│
        │       Cracked,       │
        │     Oiled Crust      │
        └──────────────────────┘
                 │
                 ▼
        ┌─────────────────┐
        │    Freeze the   │——105
        │   Constructed   │
        │     Sandwich    │
        └─────────────────┘
                 │
                 ▼
        ┌──────────────────────────┐
        │        Store the         │——106
        │    Frozen Sandwich       │
        │ Under Freezing Conditions│
        └──────────────────────────┘
                 │
                 ▼
        ┌─────────────────┐
        │ Reheat Sandwich │——107
        │ For Consumption │
        └─────────────────┘
```

## FIG. 2